# EUROPEAN PATENT APPLICATION

(11) **EP 4 489 212 A2**
(43) Date of publication of application: **08.01.2025**
(21) Application number: 24184236.8
(22) Date of filing: 25.06.2024
(51) Int. Cl.: H01M 50/553, H01M 50/562, H01M 50/567

(54) **TERMINAL FOR ELECTRICITY STORAGE DEVICE AND ELECTRICITY STORAGE DEVICE**

(30) Priority: 07.07.2023 JP 2023112284
(71) Applicant: Prime Planet Energy & Solutions, Inc., Chuo-ku Tokyo 103-0022 (JP)
(72) Inventor: YAMADA, Kohei, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

A terminal includes a first conductive member formed of a first metal and a second conductive member formed of a second metal that is different from the first metal. The second conductive member includes a flange portion and a shaft portion provided on one surface of the flange portion. The second conductive member includes a first metal joining portion metallically joined to the first conductive member on an upper surface of the flange portion. The second conductive member includes a protrusion at a side closer to an outer periphery than the first metal joining portion. The first conductive member includes a first recessed portion that is fitted to the protrusion. The second conductive member includes a second metal joining portion where the first conductive member and the second conductive member are metallically joined to each other at the first recessed portion and the protrusion.

## Description

The present disclosure relates to a terminal for an electricity storage device and an electricity storage device.

### BACKGROUND

In Japanese Laid-open Patent Publication No. 2022-049726, a terminal including a first member that is formed of metal and has a plate-like shape and a second member that is formed of metal and is ultrasonically welded to one surface of the first member is disclosed. In the first member, a recessed portion is formed in a surface at an opposite side to the surface to which the second member is welded. In the recessed portion, the first member and the second member are ultrasonically welded to each other.

### SUMMARY

The inventors of the present disclosure desire to increase reliability of a coupling portion between members in a terminal for an electricity storage device in which multiple members are coupled.

A terminal for an electricity storage device disclosed herein includes a first conductive member formed of a first metal and a second conductive member formed of a second metal that is different from the first metal. The second conductive member includes a flange portion and a shaft portion provided on one surface of the flange portion. The second conductive member includes a first metal joining portion metallically joined to the first conductive member on an upper surface of the flange portion. The second conductive member includes at least one of a first recessed portion and a protrusion at a side closer to an outer periphery than the first metal joining portion. The first conductive member includes the other one of the first recessed portion and the protrusion that is fitted to at least the one of the first recessed portion and the protrusion. The second conductive member includes a second metal joining portion where the first conductive member and the second conductive member are metallically joined to each other at the first recessed portion and the protrusion.

According to the terminal for an electricity storage device described above, a coupling portion between the first conductive member and the second conductive member has high reliability.

### BRIEF DESCRIPTION OF THE DRAWINGS

FIG. 1 is a perspective view of an electricity storage device.
FIG. 2 is a schematic longitudinal sectional view taken along line II-II of FIG. 1.
FIG. 3 is a cross-sectional view illustrating a negative electrode terminal mounted on a sealing plate.
FIG. 4 is a perspective view illustrating a battery pack.
FIG. 5 is a schematic view of an external conductive member.
FIG. 6 is a perspective view of a second conductive member.
FIG. 7 is a schematic view illustrating a protrusion.
FIG. 8 is a schematic view of a protrusion according to another embodiment.
FIG. 9 is a cross-sectional view of a negative electrode terminal.
FIG. 10 is a cross-sectional view of a negative electrode terminal according to another embodiment.
FIG. 11 is a cross-sectional view of a negative electrode terminal according to another embodiment.
FIG. 12 is a cross-sectional view of a negative electrode terminal according to another embodiment.

### DETAILED DESCRIPTION OF THE EMBODIMENTS

Embodiments of a technology disclosed herein will be described below with reference to the accompanying drawings. As a matter of course, the embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate.

In the following description, reference signs "L," "R," "F," "Rr," "U," and "D" in the drawings respectively denote "left," "right," "front," "rear," "up," and "down," and reference signs "X," Y," and "Z" in the drawings respectively denote "a long side direction," "a short side direction," and "a height direction" of an electricity storage device. However, these directions are defined for convenience of explanation, and do not limit an installation form of the electricity storage device.

Note that, in the present specification, the term "electricity storage device" generally refers to electricity storage devices from which electric energy can be taken out. The term "electricity storage device" encompasses, as well as secondary batteries that can be repeatedly charged and discharged by moving of a charge carrier between a pair of electrodes (a positive electrode and a negative electrode) via an electrolyte, capacitors, such as an electric double layer capacitor or the like, or the like. For a method for manufacturing an electricity storage device, an embodiment in a case where a lithium-ion secondary battery is a target will be described below.

### <Electricity Storage Device 100>

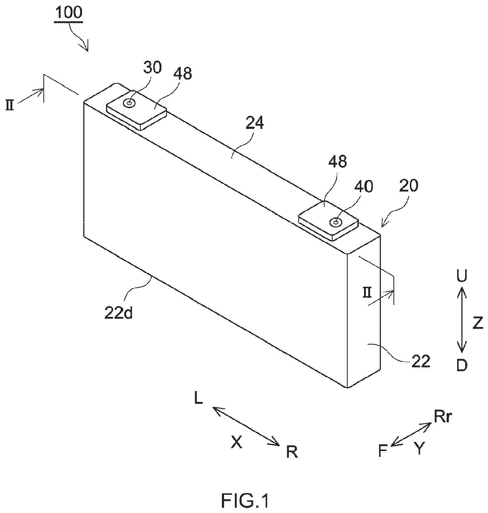

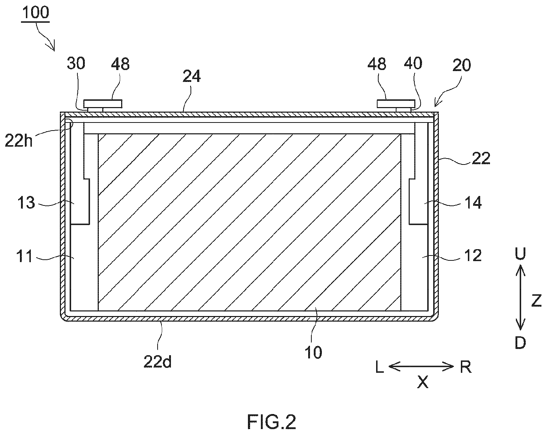

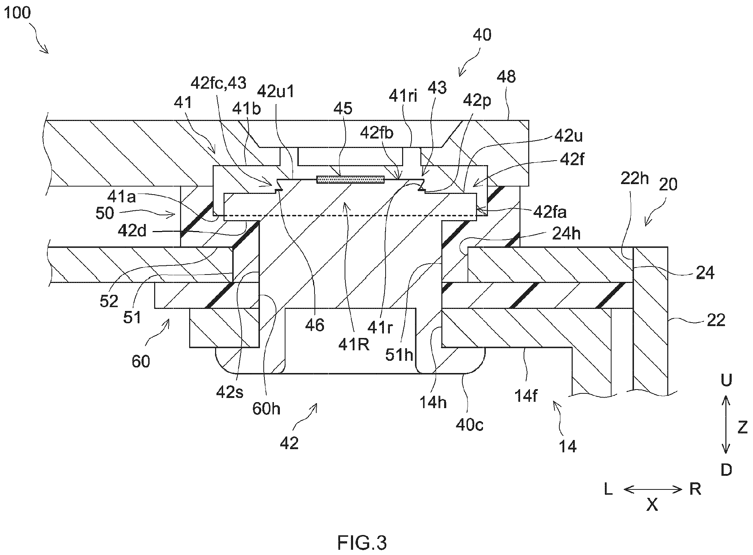

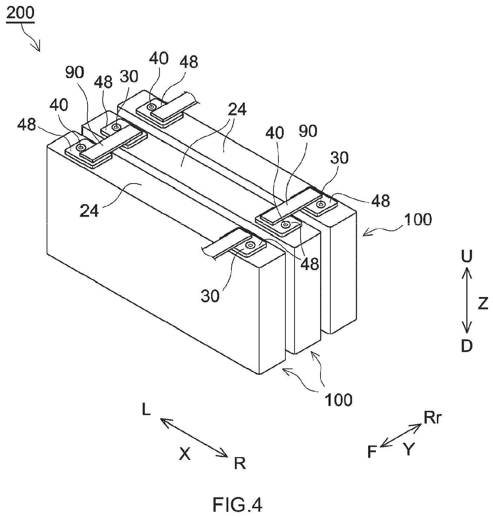

FIG. 1 is a perspective view of an electricity storage device 100. FIG. 2 is a schematic longitudinal sectional view taken along line II-II of FIG. 1. In FIG. 2, illustration of a gasket 50 and an insulator 60 is omitted. FIG. 3 is a cross-sectional view illustrating a negative electrode terminal 40 mounted on a sealing plate 24. FIG. 4 is a perspective view illustrating a battery pack 200. In FIG. 4, with the electricity storage device 100 disclosed herein assumed as a single battery, a form in which electricity storage devices 100 are coupled in series via bus bars 90 is illustrated.

As illustrated in FIG. 2, the electricity storage device 100 includes an electrode body 10, a case 20, a positive electrode terminal 30, and a negative electrode terminal 40. The electricity storage device 100 may include an external conductive member 48. The electricity storage device 100 is characterized by including the positive electrode terminal 30 and/or the negative electrode terminal 40 disclosed herein, and other components than that may be similar to those of a known device. The electricity storage device 100 is preferably a second battery, and is more preferably a nonaqueous electrolyte secondary battery. The electricity storage device 100 is preferably a rectangular secondary battery. The electricity storage device 100 is herein a lithium-ion secondary battery. Although not illustrated, the electricity storage device 100 further includes an electrolyte herein. The electricity storage device 100 is configured such that the electrode body 10 and the unillustrated electrolyte are accommodated in the case 20.

The electrode body 10 may be similar to a known electrode body, and there is no particular limitation thereon. The electrode body 10 includes a positive electrode and a negative electrode (not illustrated). The electrode body 10 is, for example, a flat wound electrode body obtained by stacking a band-like positive electrode and a band-like negative electrode with a band-like separator interposed therebetween such that the positive electrode and the negative electrode are insulated from each other and winding an obtained stacked body with a winding axis as a center. However, in another embodiment, the electrode body 10 may be a stacked electrode body in which a quadrangular (typically rectangular) positive electrode and a quadrangular (typically rectangular) negative electrode are stacked so as to be insulated from each other.

The positive electrode includes a positive electrode current collector 11 and a positive electrode mixture layer (not illustrated) fixed on the positive electrode current collector 11. The positive electrode current collector 11 is formed of a conductive metal, such as, for example, aluminum, an aluminum alloy, nickel, stainless steel, or the like. The positive electrode mixture layer includes a positive electrode active material (for example, lithium-transition metal compound oxide). The negative electrode includes a negative electrode current collector 12 and a negative electrode mixture layer (not illustrated) fixed on the negative electrode current collector 12. The negative electrode current collector is formed of a conductive metal, such as, for example, copper, a copper alloy, nickel, stainless steel, or the like. The negative electrode mixture layer includes a negative electrode active material (for example, a carbon material, such as graphite or the like).

As indicated by hatched lines in FIG. 2, a stacking portion where the positive electrode mixture layer and the negative electrode mixture layer are stacked so as to be insulated from each other is formed in a central portion of the electrode body 10 in a long side direction X. On the other hand, a portion (positive electrode current collector exposed portion) of the positive electrode current collector 11 where the positive electrode mixture layer is not formed protrudes from the stacking portion in a left end portion of the electrode body 10 in the long side direction X. The positive electrode current collecting member 13 is attached to the positive electrode current collector exposed portion. The positive electrode current collecting member 13 may be formed of the same metal material as that of the positive electrode current collector 11, that is, a conductive metal, such as, for example, aluminum, an aluminum alloy, nickel, stainless steel, or the like. The positive electrode current collecting member 13 is arranged in the case 20. The positive electrode current collecting member 13 electrically couples the positive electrode and the positive electrode terminal 30.

A portion (negative electrode current collector exposed portion) of the negative electrode current collector 12 where the negative electrode mixture layer is not formed protrudes from the stacking portion in a right end portion of the electrode body 10 in the long side direction X. The negative electrode current collecting member 14 is attached to the negative electrode current collector exposed portion. A material (type of metal) of the negative electrode current collecting member 14 may be different from that of the positive electrode current collecting member 13. The negative electrode current collecting member 14 may be formed of the same type of metal as that of the negative electrode current collector 12, that is, a conductive metal, such as, for example, copper, a copper alloy, nickel, stainless steel, or the like. The negative electrode current collecting member 14 is arranged in the case 20. The negative electrode current collecting member 14 electrically couples the negative electrode and the negative electrode terminal 40. The negative electrode current collecting member 14 electrically couples the negative electrode and the negative electrode terminal 40 in the case 20.

The electrolyte may be similar to an electrolyte conventionally used, and there is no particular limitation thereon. The electrolyte is, for example, a nonaqueous liquid electrolyte (nonaqueous electrolyte solution) containing a nonaqueous solvent and a supporting salt. Examples of the nonaqueous solvent include carbonates, such as, for example, ethylene carbonate, dimethyl carbonate, ethyl methyl carbonate, or the like. The supporting salt is, for example, a fluorine-containing lithium salt, such as LiPF₆ or the like. However, the electrolyte may be in a solid form (solid electrolyte) and may be integrated with the electrode body 10.

The case 20 is a housing that accommodates the electrode body 10. The case 20 is formed in a flat and bottomed rectangular parallelopiped (rectangular) shape. However, a shape of the case 20 is not limited to a rectangular shape and may be an arbitrary shape, such as a cylindrical shape or the like. A material of the case 20 may be the same as a material conventionally used, but not limited to. The case 20 is formed of a metal material, such as, for example, aluminum, an aluminum alloy, stainless steel, or the like, having a light weight and an excellent heat conductivity. The case 20 includes an exterior body 22 including an opening 22h and a sealing plate 24 that closes the opening 22h. The case 20 preferably includes the exterior body 22 and the sealing plate 24. The case 20 is formed such that the exterior body 22 and the sealing plate 24 are integrated by joining (for example, welding joining) the sealing plate 24 to a peripheral edge of the opening 22h of the exterior body 22. The case 20 is airtightly sealed (hemetically sealed).

The exterior body 22 includes a bottom surface 22d. The sealing plate 24 is opposed to the bottom surface 22d of the exterior body 22. The sealing plate 24 is mounted on the exterior body 22 so as to close the opening 22h of the exterior body 22. The sealing plate 24 has an approximately rectangular shape herein. Note that, as used in the present specification, the term "approximately rectangular" encompasses, in addition to a complete rectangular shape (a cuboid), for example, a shape in which corners that connect long sides and short sides of rectangular surfaces are rounded, a shape in which corner portions have notches, or the like.

The positive electrode terminal 30 and the negative electrode terminal 40 protrude outward from the case 20. The positive electrode terminal 30 and the negative electrode terminal 40 protrude from the same surface of the case 20 (specifically, the sealing plate 24) herein. However, the positive electrode terminal 30 and the negative electrode terminal 40 may be configured to protrude from different surfaces of the case 20. Each of the positive electrode terminal 30 and the negative electrode terminal 40 is arranged in a corresponding one of both end portions of the sealing plate 24 in the long side direction X. The positive electrode terminal 30 and/or the negative electrode terminal 40 is one example of "a terminal for an electricity storage device."

As illustrated in FIG. 2, the positive electrode terminal 30 is electrically coupled to the positive electrode of the electrode body 10 via the positive electrode current collecting member 13 in the case 20. The negative electrode terminal 40 is electrically coupled to the negative electrode of the electrode body 10 via the negative electrode current collecting member 14 in the case 20. Each of the positive electrode terminal 30 and the negative electrode terminal 40 is mounted to the case 20 (specifically, the sealing plate 24). The positive electrode terminal 30 and the negative electrode terminal 40 are preferably fixed to the case 20 (specifically, the sealing plate 24). Each of the positive electrode terminal 30 and the negative electrode terminal 40 is insulated from the sealing plate 24 via a corresponding one of the gasket 50 (see FIG. 3) and the insulator 60 (see FIG. 3).

Configurations of the positive electrode terminal 30 and the negative electrode terminal 40 of the electricity storage device 100 will be described in detail below using a terminal structure at a negative electrode terminal 40 side as an example. The terminal structure described below is preferably provided at the negative electrode terminal 40 side. Note that the terminal structure described below may be provided at a positive electrode terminal 30 side, and may be provided at each of both of the positive electrode terminal 30 side and the negative electrode terminal 40 side. In that case, in the following description, the "negative electrode" may be read as the "positive electrode," as appropriate.

As illustrated in FIG. 3, a terminal mounting hole 24h is formed in the sealing plate 24 so as to pass through in an up-down direction Z. The terminal mounting hole 24h is provided in the case 20 (in this embodiment, the sealing plate 24). The negative electrode terminal 40 is preferably inserted in the terminal mounting hole 24h. Although not illustrated, the terminal mounting hole 24h has a circular shape (for example, a complete circular shape) when viewed from top herein. The terminal mounting hole 24h has an inner diameter that is large enough to allow insertion of a caulking portion 40c of the negative electrode terminal 40 before caulking, which will be described later, therethrough. The terminal mounting hole 24h is formed to be smaller than a flange portion 42f of the negative electrode terminal 40, which will be described later.

The negative electrode current collecting member 14 is attached to the negative electrode current collector exposed portion of the negative electrode current collector 12 and forms a conduction path that electrically couples the negative electrode and the negative electrode terminal 40. The negative electrode current collecting member 14 includes a flat plate-like portion 14f that horizontally expands along an inner surface of the sealing plate 24. In the flat plate-like portion 14f, an opening 14h is provided in a position corresponding to the terminal mounting hole 24h. The opening 14h has an inner diameter that is large enough to allow insertion of the caulking portion 40c of the negative electrode terminal 40 before the caulking, which will be described later, therethrough. The negative electrode current collecting member 14 is fixed to the sealing plate 24 with the negative electrode terminal 40 by caulking. A resin insulating member is preferably arranged between the case 20 (in this embodiment, sealing plate 24) and the negative electrode current collecting member 14. In this embodiment, the negative electrode current collecting member 14 is fixed to the sealing plate 24 with the negative electrode terminal 40 so as to be insulated from the sealing plate 24 via the insulator 60.

The gasket 50 is an insulating member arranged between an upper surface (outer surface) of the sealing plate 24 and the negative electrode terminal 40. An insulating member (for example, the gasket 50) is preferably arranged between the case 20 (for example, the sealing plate 24) and the negative electrode terminal 40. The gasket 50 has a function of insulating the sealing plate 24 and the negative electrode terminal 40 from each other and closing the terminal mounting hole 24h. The gasket 50 is formed of a resin material that has an electrical insulation property and is elastically deformable, that is, for example, fluororesin, such as perfluoroalkoxy fluororesin (PFA) or the like, polyphenylene sulfide resin (PPS), aliphatic polyamide, or the like.

The gasket 50 includes a cylindrical portion 51 and a base 52. The cylindrical portion 51 prevents direct contact of the sealing plate 24 with the caulking portion 40c of the negative electrode terminal 40. The cylindrical portion 51 has a hallow cylindrical shape. The cylindrical portion 51 includes a hole portion 51h that passes through in the up-down direction Z. The hole portion 51h is formed such that the caulking portion 40c of the negative electrode terminal 40 before caulking can be inserted therethrough. The cylindrical portion 51 is inserted through the terminal mounting hole 24h of the sealing plate 24. The base 52 prevents direct contact of the sealing plate 24 with the flange portion 42f of the negative electrode terminal 40, which will be described later. The base 52 is connected to an upper end of the cylindrical portion 51. The base 52 horizontally extends from the upper end of the cylindrical portion 51. The base 52 is formed, for example, in an annular shape so as to surround the terminal mounting hole 24h of the sealing plate 24. The base 52 extends along the upper surface of the sealing plate 24. The base 52 is sandwiched between a lower surface 42d of the flange portion 42f of the negative electrode terminal 40 and the upper surface of the sealing plate 24 and is compressed in the up-down direction Z by caulking.

The insulator 60 is an insulating member arranged between a lower surface (inner surface) of the sealing plate 24 and the negative electrode current collecting member 14. An insulating member (for example, the insulator 60) is preferably arranged between the case 20 (for example, the sealing plate 24) and the negative electrode current collecting member 14. The insulator 60 includes a flat plate-like portion that horizontally extends along the inner surface of the sealing plate 24. A hole portion 60h is formed in a position corresponding to the terminal mounting hole 24h in the flat plate-like portion. The hole portion 60h has an inner diameter that is large enough to allow insertion of a shaft portion 42s of the negative electrode terminal 40 therethrough. The insulator 60 is formed of a resin material that has resistance against an electrolyte that is used, has an electrical insulation property, and is elastically deformable, that is, for example, fluororesin, such as perfluoroalkoxy fluororesin (PFA) or the like, polyphenylene sulfide resin (PPS), or the like. The flat plate-like portion of the insulator 60 is sandwiched between the lower surface of the sealing plate 24 and the upper surface of the negative electrode current collecting member 14 and is compressed in the up-down direction Z by caulking.

### <Negative Electrode Terminal 40>

The negative electrode terminal 40 includes a first conductive member 41 and a second conductive member 42. As illustrated in FIG. 3, the negative electrode terminal 40 is inserted through the terminal mounting hole 24h and extends from inside of the case 20 to outside. The negative electrode terminal 40 may further include the external conductive member 48 coupled to the first conductive member 41 outside the case 20.

The negative electrode terminal 40 is configured such that two types of conductive members, that is, the first conductive member 41 and the second conductive member 42, are electrically coupled to each other via metal joining portions 45 and 46.

The negative electrode terminal 40 is inserted in the terminal mounting hole 24h of the sealing plate 24 and the opening 14h of the negative electrode current collecting member 14 and has a distal end portion in an insertion direction caulked on the negative electrode current collecting member 14. Specifically, the distal end portion is caulked on a peripheral edge portion of the negative electrode current collecting member 14 around the opening 14h. The caulking portion 40c is formed in a lower end portion of the negative electrode terminal 40. The negative electrode terminal 40 is fixed to the sealing plate 24 by caulking and is electrically coupled to the negative electrode current collecting member 14. The caulking portion 40c has a cylindrical shape herein. However, a shape of the caulking portion 40c is not limited to a cylindrical shape, and may be an arbitrary shape, such as a columnar shape or the like. Note that the caulking portion 40c is preferably welded to the negative electrode current collecting member 14. The first conductive member 41 and the second conductive member 42 that form the negative electrode terminal 40 will be described below.

### <First Conductive Member 41>

The first conductive member 41 is arranged outside the case 20. The first conductive member 41 is formed of a first metal. The first metal is a conductive metal, such as, for example, aluminum, an aluminum alloy, nickel, stainless steel, or the like. The first metal is preferably aluminum or an aluminum alloy. The first conductive member 41 is formed of aluminum herein. The first conductive member 41 is preferably formed of a (soft) metal having a lower Vickers' hardness than that of the second conductive member 42. The first conductive member 41 may be formed of an alloy containing, as a first component (component contained at a highest blending ratio by weight, the same applies below), the same metal or the same metal element as that of the positive electrode current collecting member 13.

The first conductive member 41 preferably has a diameter that is larger than a thickness thereof. In this embodiment, the first conductive member 41 has a plate-like shape (specifically, flat plate-like shape). The first conductive member 41 preferably has an approximately disk-like shape when viewed from top. The first conductive member 41 includes a first surface 41a and a second surface 41b. The first surface 41a is joined to the second conductive member 42.

The second surface 41b is a surface at an opposite side to the first surface 41a. In this embodiment, a rib 41ri having an annular shape is formed in the second surface 41b of the first conductive member 41. The rib 41ri can be continuously formed in an annular shape. The external conductive member 48 is joined to the second surface 41b by welding via the rib 41ri. The external conductive member 48 preferably extends in a longitudinal direction of the sealing plate 24. The external conductive member 48 is preferably formed of the same type of metal as that of the first conductive member 41 (in this embodiment, aluminum or an aluminum alloy).

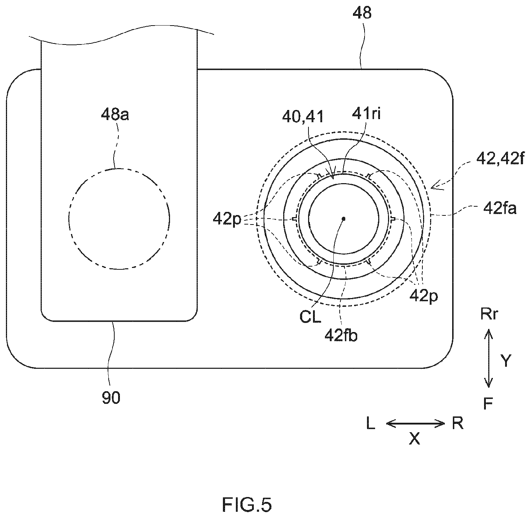

As illustrated in FIG. 4, in forming the battery pack 200, a bus bar 90 is coupled to the external conductive member 48 coupled to the first conductive member 41. FIG. 5 is a schematic view of the external conductive member 48. In FIG. 5, the external conductive member 48 and the bus bar 90 when viewed from top are schematically illustrated. In FIG. 5, the second conductive member 42 hidden behind the external conductive member 48 is indicated by a broken line. As illustrated in FIG. 5, the bus bar 90 is coupled to the external conductive member 48 in a bus bar welding portion 48a. The bus bar 90 and the external conductive member 48 can be welded, for example, by laser welding or the like. Note that the external conductive member 48 may not be necessarily mounted on the second surface 41b of the first conductive member 41. In forming the battery pack 200 (see FIG. 4), the bus bar 90 may be directly coupled to the first conductive member 41 without the external conductive member 48 provided therebetween.

### <Second Conductive Member 42>

As illustrated in FIG. 3, the second conductive member 42 is inserted through the terminal mounting hole 24h and extends from the inside of the case 20 to outside. The second conductive member 42 is formed of a second metal that is different from the first metal. The second metal is a conductive metal, such as, for example, copper, a copper alloy, nickel, stainless steel, iron, an iron alloy, or the like. The second metal is preferably formed of copper or a copper alloy. The second conductive member 42 is formed of copper herein. The second conductive member 42 is preferably formed of a (hard) metal having a higher Vickers' hardness than that of the first conductive member 41. The second metal may be formed of an alloy containing, as a first component, the same metal or the same metal element as that of the negative electrode current collecting member 14. The second conductive member 42 may be configured such that a portion or an entire portion of a surface of the second conductive member 42 is coated with some other metal by Ni plating, tin plating, or the like.

The second conductive member 42 includes the flange portion 42f and the shaft portion (coupling portion) 42s. The shaft portion 42s is coupled to the negative electrode current collecting member 14 to serve as the caulking portion 40c. The shaft portion 42s is provided on one surface (in this embodiment, the lower surface 42d) of the flange portion 42f. The shaft portion 42s is inserted through the terminal mounting hole 24h of the case 20 (in this embodiment, the sealing plate 24) and the opening 14h of the negative electrode current collecting member 14. The base 52 of the gasket 50 is arranged between the flange portion 42f and the sealing plate 24. The cylindrical portion 51 of the gasket 50 is arranged between the shaft portion 42s and the sealing plate 24. A diameter of the shaft portion 42s increases as proceeding toward a distal end thereof. A portion thereof having an increased diameter is coupled to the negative electrode current collecting member 14. The portion having an increased diameter will be also referred to as the "caulking portion 40c," and is preferably caulked and coupled to the negative electrode current collecting member 14 in a state of being inserted through the opening 14h of the negative electrode current collecting member 14. From a viewpoint of increasing conductivity, respective portions of the caulking portion 40c and the negative electrode current collecting member 14 are preferably joined to each other by laser welding or the like.

The flange portion 42f has a larger diameter than that of the shaft portion 42s in a surface direction (in an X direction and a Y direction). In other words, the flange portion 42f is a portion a diameter of which is extended to have a diameter larger than that of the shaft portion 42s in one end of the shaft portion 42s. The flange portion 42f is arranged outside the case 20. The flange portion 42f is coupled to the first conductive member 41.

There is no particular limitation on a shape of the flange portion 42f. For example, the flange portion 42f may have an approximately circular shape and may have an approximately polygonal shape when viewed from top in a direction (height direction) in which the shaft portion 42s extends. The flange portion 42f preferably has an approximately circular shape when viewed from top. The term "approximately circular shape" encompasses not only a complete circular shape but also a shape with a notch formed in a portion of an outer peripheral surface, or the like. At least a portion of an outer peripheral edge of the flange portion 42f preferably has a circular shape. For example, a shape of the outer peripheral edge around the flange portion 42f at a same height in a thickness direction of the flange portion 42f is preferably a circular shape.

The flange portion 42f includes a large diameter portion 42fa and a small diameter portion 42fb. The large diameter portion 42fa has a larger outer diameter than that of the small diameter portion 42fb. The large diameter portion 42fa has an approximately disk-like shape with an approximately uniform diameter over an entire thickness direction (height direction). In other words, an outer peripheral edge of an upper surface 42u of the large diameter portion 42fa has a circular shape. The small diameter portion 42fb that protrudes upward is formed in an approximately central portion of the upper surface 42u of the large diameter portion 42fa. The small diameter portion 42fb has a shape corresponding to a second recessed portion 41R. The small diameter portion 42fb has a diameter that increases as proceeding toward a distal end side (a side distant from the flange portion 42f). The diameter of the small diameter portion 42fb reduces as proceeding from a distal end toward a base end thereof. Note that the diameter of the small diameter portion 42fb may be smaller than the diameter of the shaft portion 42s.

Note that each of the outer diameters of the large diameter portion 42fa and the small diameter portion 42fb is an outer shape of a portion having a largest diameter from a central axis CL therein. In this embodiment, the outer diameter of the small diameter portion 42fb refers to an outer diameter of the small diameter portion 42fb in the upper surface 42u1 at the distal end side. In this embodiment, the outer diameter of the large diameter portion 42fa is approximately uniform in an axial direction, and therefore, refers to an outer diameter in an arbitrary position in the axial direction.

The negative electrode terminal 40 includes a contact portion C that the first conductive member 41 and the second conductive member 42 contact. In this embodiment, a portion of the flange portion 42f of the second conductive member 42 contacts the first conductive member 41 in a first recessed portion 41r. In the contact portion C, the second conductive member 42 includes the first metal joining portion 45 and the second metal joining portion 46. The first metal joining portion 45 and the second metal joining portion 46 are joint portions in which the first conductive member 41 and the second conductive member 42 are joined to each other by metal joining. The first metal joining portion 45 is formed on an upper surface of the flange portion 42f so as to be located in a portion closer to center of the upper surface than the second metal joining portion 46. Thus, deterioration of the first metal joining portion 45 caused by an electrolyte solution, a load applied via an external coupling member, or the like can be reduced.

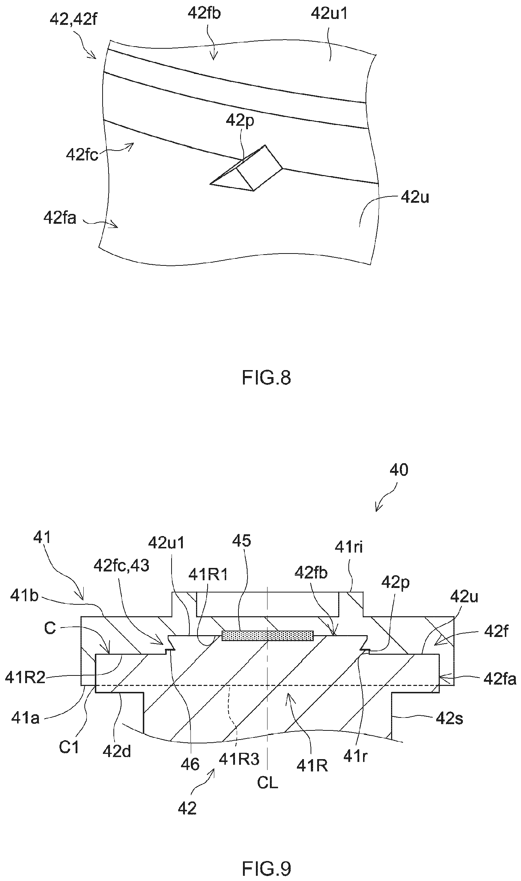

In this embodiment, the first metal joining portion 45 is formed on the upper surface 42u1 of the small diameter portion 42fb. From a viewpoint of suppressing corrosion by the electrolyte solution, water, or the like, the first metal joining portion 45 is preferably formed by metallically joining the upper surface of the flange portion 42f and a bottom surface of a recessed portion of the first conductive member 41 (in this embodiment, a first bottom surface 41R1 of the second recessed portion 41R (see FIG. 9) that will be described later) to each other. The first metal joining portion 45 is preferably formed in a central portion of the upper surface of the flange portion 42f.

As used herein, the term "metal joining" refers to joining of metal members to each other by metallurgical joining and excludes joining by mechanical fastening. The metal joining portions 45 and 46 are preferably formed by ultrasonic joining, diffusion joining, laser welding, or the like. From a viewpoint of suppressing formation of a brittle intermetallic compound at a joining interface, each of the metal joining portions 45 and 46 is preferably an ultrasonic joining portion formed by ultrasonic joining. In this embodiment, each of the metal joining portions 45 and 46 is an ultrasonic joining portion where the first conductive member 41 and the second conductive member 42 are joined to each other by ultrasonic joining.

The second conductive member 42 includes a protrusion 42p in a position closer to an outer periphery than the first metal joining portion 45. The protrusion 42p is provided in the contact portion C between the first conductive member 41 and the second conductive member 42. In this embodiment, the protrusion 42p is formed on the upper surface 42u of the large diameter portion 42fa in the upper surface of the flange portion 42f.

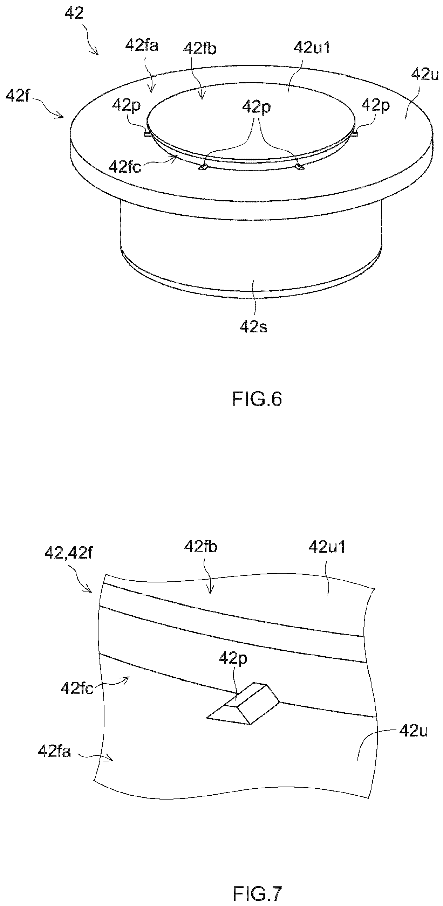

FIG. 6 is a perspective view of the second conductive member 42. FIG. 7 is a schematic view of the protrusion 42p. FIG. 8 is a schematic view of the protrusion 42p according to another embodiment. As illustrated in FIG. 6, the protrusion 42p is provided near the small diameter portion 42fb on the upper surface 42u of the large diameter portion 42fa. The protrusion 42p may be connected to the small diameter portion 42fb, and may be provided distant from the small diameter portion 42fb. In this embodiment, the protrusion 42p is provided to be connected to the small diameter portion 42fb and extend from the base end of the small diameter portion 42fb in a radial direction.

As illustrated in FIG. 7, the protrusion 42p has a distal end having a flat shape. The protrusion 42p has an approximately trapezoidal cross section in a length direction (radial direction of the flange portion 42f). A shape of the protrusion 42p is not limited thereto and, as illustrated in FIG. 8, may have a shape with a sharp distal end. The protrusion 42p may have an approximately triangular cross section in the length direction. There is no particular limitation on dimension and shape of the protrusion 42p. In terms of durability of the protrusion 42p, an aspect ratio A/B expressed by a height B of the protrusion 42p with respect to a width A of a base end of the protrusion 42p is preferably 1 or more.

As illustrated in FIG. 6 and FIG. 7, the protrusion 42p is formed to extend in the radial direction of the flange portion 42f. There is no particular limitation on a length of the protrusion 42p in the radial direction. For example, the length of the protrusion 42p in the radial direction is preferably 0.25 mm or more, and is more preferably 0.5 mm or more. Moreover, the length of the protrusion 42p in the radial direction is preferably 5 mm or less, and is more preferably 3 mm or less.

As illustrated in FIG. 5, six protrusions 42p are provided on the upper surface 42u of the large diameter portion 42fa of the flange portion 42f. The six protrusions 42p are provided at an approximately same distance from the central portion in the radial direction. As for intervals between the protrusions 42p, for example, the protrusions 42p can be provided at approximately same intervals in a circumferential direction. Note that there is no particular limitation on number, arrangement, interval, or the like of the protrusions 42p. The number of the protrusions 42p may be one. From a viewpoint of increasing conductivity of the first conductive member 41 and the second conductive member 42, the number of the protrusions 42p is preferably plural, and is more preferably four or more. In terms of productivity, for example, the number of the protrusions 42p may be 20 or less, may be 12 or less, and may be eight or less.

FIG. 9 is a cross-sectional view of the negative electrode terminal 40. In FIG. 9, a cross section around an interface between the first conductive member 41 and the second conductive member 42 is illustrated. In FIG. 9, illustration of the sealing plate 24, the gasket 50, the insulator 60, the negative electrode current collecting member 14, or the like is omitted. As illustrated in FIG. 9, the protrusion 42p of the second conductive member 42 bites in the first conductive member 41. In other words, the first conductive member 41 includes the first recessed portion 41r that is fitted to the protrusion 42p of the second conductive member 42. The first conductive member 41 includes the same number of first recessed portions 41r as that of the protrusions 42p of the second conductive member 42. Each of the first recessed portions 41r is formed in a shape corresponding to a corresponding one of the protrusions 42p at the same position as that of the corresponding one of the protrusions 42p. As for the first recessed portion 41r and the protrusion 42p, it is preferable that multiple first recessed portions 41r and multiple protrusions 42p are provided. The second metal joining portion 46 described above is formed such that the first conductive member 41 and the second conductive member 42 are metallically joined to each other at the first recessed portion (in this embodiment, the first recessed portion 41r of the first conductive member 41) and the protrusion (in this embodiment, the protrusion 42p of the second conductive member 42). Therefore, the first metal joining portion 45 formed on the upper surface 42u1 of the small diameter portion 42fb and the second metal joining portion 46 formed on the upper surface 42u of the large diameter portion 42fa are formed in different positions in a direction in which the shaft portion 42s extends.

There is no particular limitation on the second metal joining portion 46, as long as the second metal joining portion 46 is formed at a side of an outer periphery of the first metal joining portion 45. In this embodiment, the first metal joining portion 45 is formed on the central axis CL of the negative electrode terminal 40 (the shaft portion 42s). The second metal joining portion 46 is formed in a position distant from the central axis CL. However, arrangement of the first metal joining portion 45 and the second metal joining portion 46 is not limited thereto. The first metal joining portion 45 and the second metal joining portion 46 may be connected to each other. The first metal joining portion 45 and the second metal joining portion 46 may be formed on the same plane. An area where the first metal joining portion 45 and the second metal joining portion 46 are not joined to each other by metal joining may be provided between the first metal joining portion 45 and the second metal joining portion 46.

Incidentally, when the electricity storage device moves or vibrates while being used, a load can be applied to a terminal coupled to an external coupling member, such as a bus bar or the like. In a case where the terminal is configured by metallically joining conductive members to each other, the load that can be applied to the terminal via the external coupling member can also acts on a joining interface of the conductive members. For example, when the bus bar moves about a central axis of the terminal in a circumferential direction, a force can be applied to one of the conductive members to which the bus bar is coupled in a direction of rotation about the central axis. Thus, a load can be applied to a metal joining portion. According to a finding of the inventors of the present disclosure, with a load applied to the metal joining portion, there is a concern that the joining interface of the metal joining portion comes off or a joining area at the joining interface is reduced. In such a case, there is also a concern that conduction between the conductive members that form the terminal can be reduced.

In the embodiment described above, the second conductive member 42 includes the first metal joining portion 45 metallically joined to the first conductive member 41 on the upper surface of the flange portion 42f. Thus, a good conductivity is achieved between the first conductive member 41 and the second conductive member 42. The second conductive member 42 includes the protrusion 42p fitted in the first recessed portion 41r of the first conductive member 41 at the side of the outer periphery of the first metal joining portion 45. According to the configuration described above, for example, even when a force is applied in the circumferential direction about the central axis CL of the negative electrode terminal 40 by the external coupling member, such as the bus bar 90 or the like, a load is less likely to be applied in a direction in which the first conductive member 41 is rotated with respect to the second conductive member 42 since the protrusion 42p and the first recessed portion 41r are fitted to each other. Thus, the first metal joining portion 45 is likely to be maintained and, in the negative electrode terminal 40, good conduction reliability between the first conductive member 41 and the second conductive member 42 is achieved. Furthermore, in the first recessed portion 41r and the protrusion 42p, the second metal joining portion 46 is formed. Thus, better conduction between the first conductive member 41 and the second conductive member 42 is achieved. Note that an effect of reducing a load applied to the first metal joining portion 45 can be achieved both when an external coupling member is directly coupled to the first conductive member 41 of the negative electrode terminal 40 and when an external coupling member is coupled thereto via the external conductive member 48.

Note that, the larger a distance between the central axis CL of the negative electrode terminal 40 and the coupling portion of the external coupling member is, the larger the load applied to the terminal via the external coupling member becomes. Therefore, when the external conductive member 48 is coupled to the negative electrode terminal 40 and the external coupling member is coupled to the external conductive member 48, the effect of reducing the load applied to the first metal joining portion 45 can be further enhanced.

In the embodiment described above, the second conductive member 42 includes the protrusion 42p. The first conductive member 41 includes the first recessed portion 41r to which the protrusion 42p is fitted. However, the configuration of the first conductive member 41 and the second conductive member 42 is not limited thereto. A protrusion may be provided in at least one of the first conductive member and the second conductive member, and a first recessed portion may be provided in the other one of the first conductive member and the second conductive member. For example, the first conductive member may include the protrusion, and the second conductive member may include the first recessed portion that is fitted to the protrusion. Each of the first conductive member and the second conductive member may include a protrusion. In this case, each of the first conductive member and the second conductive member may include a first recessed portion fitted to the protrusion of the other one of the first conductive member and the second conductive member.

However, from a viewpoint of fitting the protrusion provided on one of the conductive members to the other one of the conductive members, the protrusion is preferably provided on one of the first conductive member 41 and the second conductive member 42 having a higher Vickers' hardness than that of the other one of the first conductive member 41 and the second conductive member 42. In view of the foregoing, the second conductive member 42 preferably includes at least the protrusion 42p.

Note that various other coupling structures than the first metal joining portion 45 and the second metal joining portion 46 described above may be provided in the first conductive member 41 and the second conductive member 42.

As illustrated in FIG. 9, the first conductive member 41 includes the second recessed portion 41R. The second recessed portion 41R is formed in an approximately central portion of the first surface 41a of the first conductive member 41. The second recessed portion 41R is a portion where at least a portion of the flange portion 42f is arranged. In this embodiment, the large diameter portion 42fa and the small diameter portion 42fb of the flange portion 42f are arranged in the second recessed portion 41R. The second recessed portion 41R has a shape corresponding to the large diameter portion 42fa and the small diameter portion 42fb. The first conductive member 41 includes the second recessed portion 41R that accommodates the flange portion 42f of the second conductive member 42, so that relative movement of the first conductive member 41 and the second conductive member 42 can be suppressed. As a result, joining of the metal joining portions 45 and 46 to each other can be easily maintained and reliability of the negative electrode terminal 40 can be increased.

Herein, an area of the second recessed portion 41R is larger than an area of the first recessed portion 41r when viewed in the direction in which the shaft portion 42s of the second conductive member 42 extends. Therefore, the first recessed portion 41r of the first conductive member 41 is provided in at least one of respective positions of the first bottom surface 41R1 and a second bottom surface 41R2 that will be described later. The second conductive member 42 preferably includes at least one of the first recessed portion and the protrusion 42p in an area arranged in the second recessed portion 41R. According to the configuration described above, joining of the metal joining portions 45 and 46 to each other can be easily maintained.

In this embodiment, the second recessed portion 41R includes the first bottom surface 41R1 and the second bottom surface 41R2 having different depths. The first bottom surface 41R1 is provided in a deeper position than the second bottom surface 41R2. Herein, the first bottom surface 41R1 is provided in a deepest position in the second recessed portion 41R. In other words, the first bottom surface 41R1 is provided in a most distant position from an opening 41R3 in in the second recessed portion 41R. The first bottom surface 41R1 is an approximately circular surface, and has a shape corresponding to the upper surface 42u1 of the small diameter portion 42fb in the flange portion 42f of the second conductive member 42. The second bottom surface 41R2 is provided between the first bottom surface 41R1 and the opening 41R3. The second bottom surface 41R2 is an approximately annular surface, and has a shape corresponding to the upper surface 42u of the large diameter portion 42fa in the flange portion 42f.

The second recessed portion 41R is recessed from the opening 41R3 toward the second bottom surface 41R2 in an approximately circular shape with an approximately uniform diameter. The large diameter portion 42fa has an outer diameter corresponding to an inner diameter of the second recessed portion 41R at a side closer to the opening 41R3 than the second bottom surface 41R2. In other words, the large diameter portion 42fa is an approximately disk-like member having the approximately same diameter as the inner diameter of a portion from the opening 41R3 of the second recessed portion 41R to the first bottom surface 41R1. In this embodiment, a thickness of the large diameter portion 42fa is set to be slightly larger than a length from the second bottom surface 41R2 to the opening 41R3. Therefore, the large diameter portion 42fa slightly protrudes downward from the first surface 41a of the first conductive member 41. A dimensional relation between the large diameter portion 42fa and the second recessed portion 41R in the height direction is not limited thereto.

In a portion of the first recessed portion 41R extending from the second bottom surface 41R2 to the first bottom surface 41R1, the second recessed portion 41R is recessed in an approximately truncated cone-like shape. The second bottom surface 41R2 inwardly projects toward the first bottom surface 41R1. Therefore, a side surface of the second recessed portion 41R is tapered from the first bottom surface 41R1 toward the second bottom surface 41R2 such that the diameter is gradually reduced. In other words, the side surface of the second recessed portion 41R is tapered such that the diameter is gradually increased from the second bottom surface 41R2 toward the first bottom surface 41R1.

The first conductive member 41 and the second conductive member 42 may be mechanically fastened to each other. In this embodiment, the second conductive member 42 is mechanically fastened to the second recessed portion 41R of the first conductive member 41. The flange portion 42f includes a fastening portion 43 mechanically fastened to the first conductive member 41.

The fastening portion 43 is realized between the small diameter portion 42fb of the flange portion 42f and the first bottom surface 41R1 and the second bottom surface 41R2 of the second recessed portion 41R. Herein, the small diameter portion 42fb of the flange portion 42f is fitted to a side peripheral surface between the first bottom surface 41R1 and the second bottom surface 41R2 that inwardly projects in the second recessed portion 41R of the first conductive member 41. In other words, the small diameter portion 42fb of the flange portion 42f is pressed in the second recessed portion 41R of the first conductive member 41 and is caulked to the side peripheral surface between the second bottom surface 41R2 and the first bottom surface 41R1. With the first conductive member 41 and the second conductive member 42 mechanically fastened to each other, the first conductive member 41 and the second conductive member 42 can be firmly fastened to each other and the reliability of the negative electrode terminal 40 can be increased.

There is no particular limitation on a form of the fastening portion 43 as long as the fastening portion 43 is mechanically fastened, for example, by mechanical energy. The fastening portion 43 can be a portion fastened, for example, by press fitting, shrink fitting, caulking, riveting, folding, bolt joining, or the like.

In this embodiment, the flange portion 42f includes a groove 42fc in an outer peripheral side surface. The groove 42fc is a portion of the flange portion 42f that is constricted, and is also referred to as a "narrow portion." A portion of the first conductive member 41 is arranged in the groove 42fc. According to the configuration described above, the first conductive member 41 and the second conductive member 42 can be more firmly fastened to each other and the reliability of the negative electrode terminal 40 can be increased. The groove 42fc is formed in a boundary portion between the large diameter portion 42fa and the small diameter portion 42fb. The groove 42fc may be continuously formed in a circumferential direction of the flange portion 42f, may be intermittently formed, and may be partially formed. The groove 42fc is preferably formed continuously in an annular shape in the circumferential direction of the flange portion 42f. In this embodiment, the groove 42fc is continuous in the circumferential direction, and an outer peripheral edge of a narrowest portion (constricted portion) of the groove 42fc has a circular shape. A length of the groove 42fc relative to a peripheral length is preferably 0.5 or more, is more preferably 0.7 or more, and is even more preferably 0.9 or more. Herein, the peripheral length refers to a peripheral length of a portion of the side peripheral surface of the flange portion 42f in which the groove 42fc is formed.

The fastening portion 43 is arranged in a position that is distant from an end portion C1 of the contact portion C. In this embodiment, the end portion C1 of the contact portion C is a position where the opening 41R3 of the second recessed portion 41R of the first conductive member 41 is formed. The end portion C1 is a portion that is exposed from a contact surface between the first conductive member 41 and the second conductive member 42. From a viewpoint of suppressing corrosion by an electrolyte solution, water, or the like, the fastening portion 43 is preferably arranged in a position distant from the end portion C1 of the contact portion C. For example, a shortest creeping distance between the fastening portion 43 and the end portion C1 of the contact portion C is preferably 1 mm or more, is more preferably 2 mm or more, and is even more preferably 5 mm or more. As used herein, the term "creeping surface distance" refers to a distance along the contact portion C. In this embodiment, the creeping surface distance is a distance from the opening 41R3 of the second recessed portion 41R of the first conductive member 41 to the base end of the small diameter portion 42fb of the second conductive member 42 and is also a distance along the inner peripheral side surface of the first conductive member 41 or the outer peripheral side surface of the second conductive member 42.

Similarly, from a viewpoint of suppressing corrosion by the electrolyte solution, water, or the like, the second metal joining portion 46 is preferably arranged in a position distant from the end portion C1 of the contact portion C. For example, a shortest creeping surface distance between the second metal joining portion 46 and the end portion C1 of the contact portion C is preferably 1 mm or more, is more preferably 2 mm or more, and is even more preferably 5 mm or more. The second metal joining portion 46 is preferably provided more inside than the fastening portion 43.

### <Method for Manufacturing Negative Electrode Terminal 40>

The negative electrode terminal 40 described above can be manufactured, for example, by a method for manufacturing a terminal (in this embodiment, the negative electrode terminal 40) for an electricity storage device that will be described below. A method for manufacturing a terminal for an electricity storage device includes a preparation step of preparing the first conductive member 41 and the second conductive member 42, a fastening step of fastening the first conductive member 41 and the second conductive member 42, and a metal joining step of metallically joining the first conductive member 41 and the second conductive member 42. The method for manufacturing a terminal for an electricity storage device may include some other step.

In the preparation step, the first conductive member 41 and the second conductive member 42 are prepared. As the second conductive member 42, the second metal having the shape described above is prepared. In this embodiment, as the first conductive member 41, a metal having a lower hardness than that of the second conductive member 42 is used. As the first conductive member 41, the metal formed in a shape that is deformed along the large diameter portion 42fa, the small diameter portion 42fb, and the groove 42fc of the second conductive member 42 when being caulked in the fastening step is prepared.

In the fastening step, the first conductive member 41 and the second conductive member 42 are mechanically fastened to each other. In this embodiment, the first conductive member 41 and the second conductive member 42 are mechanically fastened to each other by caulking the first conductive member 41 to the second conductive member 42.

In the fastening step, first, the first conductive member 41 is arranged in a mold (not illustrated). In this embodiment, the second conductive member 42 is pressed against the first conductive member 41 such that the flange portion 42f of the second conductive member 42 is inserted in the second recessed portion 41R of the first conductive member 41. At this time, a known press device (not illustrated) or the like can be used. Since the first conductive member 41 has a lower hardness than that of the second conductive member 42, the first conductive member 41 is crushed and is plastically deformed along the second conductive member 42. An edge of the second recessed portion 41R of the first conductive member 41 is press-fit to the groove 42fc of the second conductive member 42, so that the first conductive member 41 and the second conductive member 42 are fastened to each other. In the fastening step, as described above, various fastening methods in which the first conductive member 41 and the second conductive member 42 are metallically fastened to each other may be employed.

In the second conductive member 42, the protrusion 42p is provided. In the fastening step, the protrusion 42p may bite in the first conductive member 41 and the first recessed portion 41r may be formed in the first conductive member 41 when the second conductive member 42 is pressed against the first conductive member 41.

When the first conductive member 41 and the second conductive member 42 are fastened to each other and the fastening portion 43 is formed, the first conductive member 41 and the second conductive member 42 are metallically joined to each other next.

In the metal joining step, the first metal joining portion 45 is formed at the interface between the first conductive member 41 and the second conductive member 42 at the inner periphery side of the fastening portion 43. In this embodiment, the first conductive member 41 and the second conductive member 42 are metallically joined to each other by the ultrasonic joining portion. Although not illustrated in detail, in the metal joining step, the first conductive member 41 and the second conductive member 42 fastened to each other are sandwiched between a horn and an anvil and ultrasonic vibration is given to the joining interface via the horn. For example, the anvil may be inserted in a cylindrical portion of the shaft portion 42s of the second conductive member 42 and ultrasonic vibration may be given to the first conductive member 41 while the horn is pressed to an approximately central portion of the second surface 41b of the first conductive member 41. As a result, the first metal joining portion 45 is formed in an approximately central portion of an interface between the first bottom surface 41R1 of the second recessed portion 41R of the first conductive member 41 and the upper surface 42u1 of the small diameter portion 42fb of the second conductive member 42. In pressing the horn against the first conductive member 41, the first conductive member 41 is pressed against the second conductive member 42. By this pressing, the protrusion 42p may bite in the first conductive member 41 and the first recessed portion 41r may be formed in the first conductive member 41.

In the metal joining step, ultrasonic vibration is given to the first conductive member 41, so that the first conductive member 41 vibrates also at a contact interface between the first recessed portion 41r of the first conductive member 41 and the protrusion 42p of the second conductive member 42. Thus, the second metal joining portion 46 is formed at the contact interface between the first recessed portion 41r and the protrusion 42p. From a viewpoint of facilitating formation of the second metal joining portion 46, a shape that is tapered toward a distal end of the protrusion (a shape in which an area of the distal end is small) is preferable.

The smaller a distance from a position where the horn is pressed is, the more likely to be transmitted the ultrasonic vibration given by the horn becomes. Therefore, when the position where the second metal joining portion 46 is formed is closer to the position where the horn is pressed (in this embodiment, the approximately central portion of the second surface 41b of the first conductive member 41), a preferable second metal joining portion 46 can be formed more easily.

In the embodiment described above, the protrusion 42p is provided in the second conductive member 42 prepared in the preparation step in advance. However, formation of the protrusion is not limited thereto, and the protrusion may be provided in the first conductive member prepared in the preparation step in advance. Moreover, in the preparation step, the first recessed portion may be provided in at least one of the first conductive member and the second conductive member in advance. In the fastening step, the protrusion extending along the first recessed portion of one of the first conductive member and the second conductive member may be formed in the other one of the first conductive member and the second conductive member. However, from a viewpoint of causing the second metal joining portion to be easily generated by ultrasonic vibration, a protrusion is preferably provided in advance in a position where the second conductive member is formed.

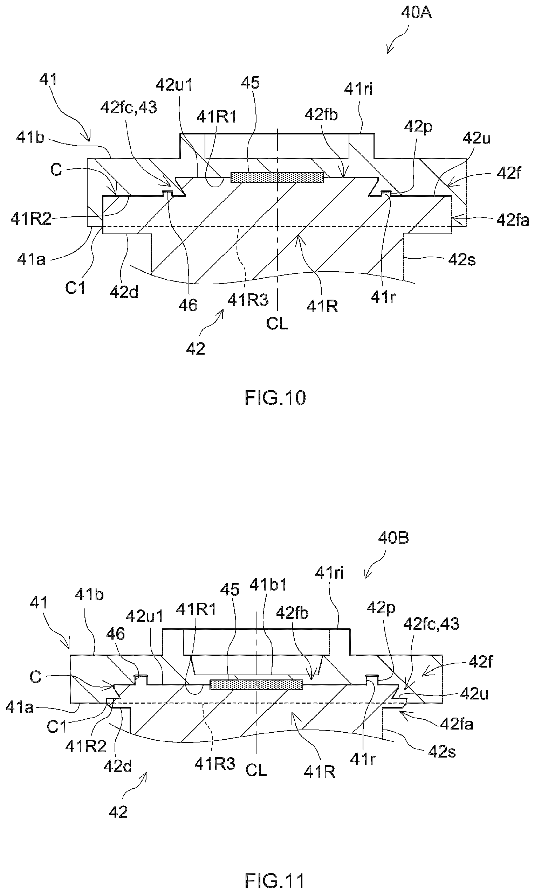

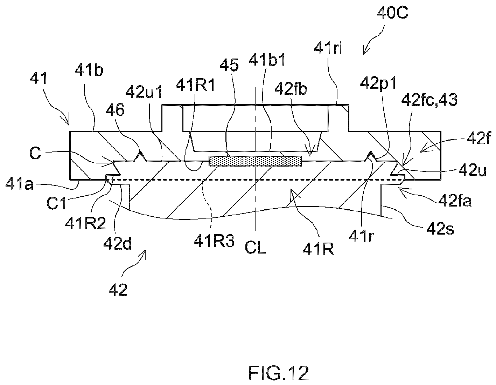

The configuration of the negative electrode terminal 40 is not limited to the embodiment described above. FIG. 10 is a cross-sectional view of a negative electrode terminal 40A according to another embodiment. FIG. 11 is a cross-sectional view of a negative electrode terminal 40B according to another embodiment. FIG. 12 is a cross-sectional view of a negative electrode terminal 40C according to another embodiment. In FIG. 10 to FIG. 12, each component that is in common with the negative electrode terminal 40 described above is denoted by the same reference sign and detailed description thereof will be omitted.

In the negative electrode terminal 40A illustrated in FIG. 10, the protrusion 42p is provided in a position distant from the small diameter portion 42fb. Therefore, as compared to the negative electrode terminal 40 (see FIG. 9), the first recessed portion 41r is formed in a position more distant from the central axis CL. Therefore, as compared to the negative electrode terminal 40, a structure in which the protrusion 42p and the first recessed portion 41r are fitted is formed in the position more distant from the central axis CL. Thus, durability to a load applied in the direction the first conductive member 41 is rotated with respect to the second conductive member 42 can be increased.

In the negative electrode terminal 40B illustrated in FIG. 11, a recessed portion 41b1 is formed in the approximately central portion of the second surface 41b of the first conductive member 41. Therefore, in the metal joining step, a distance between the position where the horn is pressed against a bottom of the recessed portion 41b1 and the contact portion C is reduced. Thus, ultrasonic vibration can be easily transmitted to the interface between the first conductive member 41 and the second conductive member 42 and joining strength of the first metal joining portion 45 can be increased.

The protrusion 42p of the second conductive member 42 is provided on the upper surface 42u1 of the small diameter portion 42fb. Therefore, in the metal joining step, a distance between the position where the horn is pressed to the first conductive member 41 and each of the protrusion 42p and the first recessed portion 41r is reduced. Thus, ultrasonic vibration can be easily transmitted to an interface between the protrusion 42p and the first recessed portion 41r and joining strength of the second metal joining portion 46 can be made preferable.

The small diameter portion 42fb of the second conductive member 42 extends more outside than the shaft portion 42s in the radial direction. Therefore, as compared to the negative electrode terminal 40 (see FIG. 9), a difference in diameter between the large diameter portion 42fa and the small diameter portion 42fb is smaller. Thus, the peripheral length of the groove 42fc is increased, and a length of a portion where the fastening portion 43 is formed is increased. As a result, the first conductive member 41 and the second conductive member 42 can be mechanically fastened to each other more firmly.

In the negative electrode terminal 40C illustrated in FIG. 12, in the circumferential direction of the flange portion 42f, a cross section of a protrusion 42p 1 has an approximately triangular shape. In the cross section of the flange portion 42f in the circumferential direction, the protrusion 42p1 has a shape with a sharp distal end, so that ultrasonic vibration is likely to be given in a state where the first conductive member 41 and the second conductive member 42 contact each other at the interface between the first conductive member 41 and the second conductive member 42. As a result, the second metal joining portion 46 can be easily formed.

The technology disclosed herein has been described above in various forms. However, the embodiments described above shall not limit the present disclosure, unless specifically stated otherwise. Various changes can be made to the technology described herein, and each of components and processes described herein can be omitted as appropriate or can be combined with another one or other ones of the components and the processes as appropriate, unless a particular problem occurs. The present specification includes disclosure set force in the following items.

First item: A terminal for an electricity storage device, the terminal including a first conductive member formed of a first metal, and a second conductive member formed of a second metal that is different from the first metal, in which the second conductive member includes a flange portion and a shaft portion provided on one surface of the flange portion, the second conductive member includes a first metal joining portion metallically joined to the first conductive member on an upper surface of the flange portion, the second conductive member includes at least one of a first recessed portion and a protrusion at a side closer to an outer periphery than the first metal joining portion, the first conductive member includes the other one of the first recessed portion and the protrusion that is fitted to at least the one of the first recessed portion and the protrusion, and the second conductive member includes a second metal joining portion where the first conductive member and the second conductive member are metallically joined to each other at the first recessed portion and the protrusion.

Second item: The terminal for an electricity storage device according to the first item, in which the first conductive member includes a second recessed portion, and at least a portion of the flange portion is arranged in the second recessed portion.

Third item: The terminal for an electricity storage device according to the first or second item, in which the flange portion includes a fastening portion mechanically fastened to the first conductive member.

Fourth item: The terminal for an electricity storage device according to the second item, in which the flange portion includes a groove in an outer peripheral side surface, and a portion of the first conductive member is arranged in the groove.

Fifth item: The terminal for an electricity storage device according to any one of the first to fourth items, the terminal further including a contact portion that the first conductive member and the second conductive member contact, in which the second metal joining portion is arranged in a position distant from an end portion of the contact portion.

Sixth item: An electricity storage device including an electrode body including a positive electrode and a negative electrode, a case that accommodates the electrode body, and a terminal electrically coupled to the positive electrode or the negative electrode and mounted on the case, in which the terminal includes a first conductive member formed of a first metal, and a second conductive member formed of a second metal that is different from the first metal, the second conductive member includes a flange portion and a shaft portion provided on one surface of the flange portion, the second conductive member includes a first metal joining portion metallically joined to the first conductive member on an upper surface of the flange portion, the second conductive member includes at least one of a first recessed portion and a protrusion at a side closer to an outer periphery than the first metal joining portion, the first conductive member includes the other one of the first recessed portion and the protrusion that is fitted to at least the one of the first recessed portion and the protrusion, and the second conductive member includes a second metal joining portion where the first conductive member and the second conductive member are metallically joined to each other at the first recessed portion and the protrusion.

## Claims

1. A terminal (40) for an electricity storage device, the terminal (40) comprising:
a first conductive member (41) formed of a first metal; and
a second conductive member (42) formed of a second metal that is different from the first metal,
wherein
the second conductive member (42) includes a flange portion (42f) and a shaft portion (42s) provided on one surface (42d) of the flange portion (42f),
the second conductive member (42) includes a first metal joining portion (45) metallically joined to the first conductive member (41) on an upper surface of the flange portion (42f),
the second conductive member (42) includes at least one of a first recessed portion (41r) and a protrusion (42p) at a side closer to an outer periphery than the first metal joining portion (45),
the first conductive member (41) includes the other one of the first recessed portion (41r) and the protrusion (42p) that is fitted to at least the one of the first recessed portion (41r) and the protrusion (42p), and
the second conductive member (42) includes a second metal joining portion (46) where the first conductive member (41) and the second conductive member (42) are metallically joined to each other at the first recessed portion (41r) and the protrusion (42p).

2. The terminal (40) for an electricity storage device according to claim 1, wherein
the first conductive member (41) includes a second recessed portion (41R), and
at least a portion of the flange portion (42f) is arranged in the second recessed portion (41R).

3. The terminal (40) for an electricity storage device according to claim 1 or 2, wherein
the flange portion (42f) includes a fastening portion (43) mechanically fastened to the first conductive member (41).

4. The terminal (40) for an electricity storage device according to claim 2, wherein
the flange portion (42f) includes a groove (42fc) in an outer peripheral side surface, and
a portion of the first conductive member (41) is arranged in the groove (42fc).

5. The terminal (40) for an electricity storage device according to claim 1 or 2, further comprising:
a contact portion (C) that the first conductive member (41) and the second conductive member (42) contact,
wherein
the second metal joining portion (46) is arranged in a position distant from an end portion (C1) of the contact portion (C).

6. An electricity storage device (100) comprising:
an electrode body (10) including a positive electrode and a negative electrode;
a case (20) that accommodates the electrode body (10); and
a terminal (40) electrically coupled to the positive electrode or the negative electrode and mounted on the case (20),
wherein
the terminal (40) includes
a first conductive member (41) formed of a first metal, and
a second conductive member (42) formed of a second metal that is different from the first metal,
the second conductive member (42) includes a flange portion (42f) and a shaft portion (42s) provided on one surface (42d) of the flange portion (42f),
the second conductive member (42) includes a first metal joining portion (45) metallically joined to the first conductive member (41) on an upper surface of the flange portion (42f),
the second conductive member (42) includes at least one of a first recessed portion (41r) and a protrusion (42p) at a side closer to an outer periphery than the first metal joining portion (45),
the first conductive member (41) includes the other one of the first recessed portion (41r) and the protrusion (42p) that is fitted to at least the one of the first recessed portion (41r) and the protrusion (42p), and
the second conductive member (42) includes a second metal joining portion (46) where the first conductive member (41) and the second conductive member (42) are metallically joined to each other at the first recessed portion (41r) and the protrusion (42p).
